# EUROPEAN PATENT SPECIFICATION

(11) **EP 3 095 539 B1**
(45) Date of publication and mention of the grant of the patent: **22.07.2020**
(21) Application number: 16169948.3
(22) Date of filing: 17.05.2016
(51) Int. Cl.: B22F 3/105

(54) **IN-PROCESS MONITORING OF POWDER BED ADDITIVE MANUFACTURING APPARATUS AND METHOD THEREFOR**
VERFAHREN UND APPARATUS ZUR PROZESSÜBERWACHUNG VON ADDITIVER PULVERBETTFERTIGUNG
PROCÉDÉ ET APPAREIL POUR LA SURVEILLANCE DU LIT DE POUDRE EN COURS DE FABRICATION ADDITIVE

(30) Priority: 19.05.2015 US 201514715713
(43) Date of publication of application: 23.11.2016
(73) Proprietor: Lockheed Martin Corporation, Bethesda, MD 20817 (US)
(72) Inventor: Sargent, Kenneth R., Montverde, FL 34756 (US)
(74) Representative: Tergau & Walkenhorst Patentanwälte PartGmbB

(56) References cited:
- FR-A1- 3 010 334
- US-A1- 2014 159 266

## Description

### TECHNICAL FIELD

The embodiments relate generally to additive manufacturing processes, and in particular to in-process monitoring of powder bed additive manufacturing.

### BACKGROUND

Additive manufacturing (AM) is a workpiece manufacturing process by which a workpiece is manufactured one layer at a time. AM has certain advantages over traditional manufacturing techniques, including less wasted material and reduced labor costs.

There are several different types of AM processes, including, for example, powder bed processes, material deposition processes, and three-dimensional (3D) printing processes. Powder bed processes involve a heating apparatus, such as a laser or electron beam, that fuses a powder, such as stainless steel, cobalt-chrome alloys, or titanium alloys, for example, in accordance with a slice plot one layer at a time to form a workpiece.

AM has some disadvantages. AM may take substantially longer to generate a workpiece than conventional forging, stamping, or molding techniques. It may take hours to generate a single workpiece. Further, because of the need for specialized and relatively expensive AM tools, such as a powder bed, AM may not be suitable for mass production of workpieces. Moreover, AM does not always result in perfect workpieces. In the context of powder bed AM, a few potentially problematic areas are the powder itself, the recoater arm used to recoat the workpiece with an additional layer of powder, the heating apparatus, and the heating apparatus scanning mechanism.

Another disadvantage of AM is that it is difficult or impractical to inspect the workpiece prior to completion. Thus, after a workpiece is completed, the workpiece may be inspected only to determine that shortly after the AM process began, the scanning mechanism was incorrectly aligned, resulting in a misshaped workpiece that must be discarded. This results in material waste and perhaps worse, a substantial reduction in manufacturing throughput.

It may also be very difficult or impossible to properly inspect a workpiece after the workpiece has been completely manufactured, due to the geometry of the part, the thickness of the portions of the workpiece, or other reasons. Thus, a workpiece may have a latent defect that is not detected in a post-manufacturing process and may be installed on a machine only to subsequently fail due to an inability to properly inspect the workpiece. US 2014/0159266 A1 and FR 3010334 A1 disclose powder bed sensing systems for detecting defect during the additive manufacture of workpieces by using a eddy current sensor array.

### SUMMARY

The embodiments relate to in-process powder bed additive manufacturing (AM). The invention provides a powder bed sensing system according to claim 1 and a method for inspecting a workpiece according to claim 15. Generally, multiple eddy current sensor arrays are utilized during the AM process such that various aspects of the AM process are continually monitored while the workpiece is being manufactured. The eddy current sensor arrays include a defect detection eddy current sensor array, a workpiece edge detection eddy current sensor array, and may include a powder condition eddy current sensor array. Each eddy current sensor array generates signals as the eddy current sensor array is moved with respect to the powder bed. The signals are continually processed and analyzed, and, if it is determined that a quality problem exists, such as a quality of the powder in the powder bed, a quality of a material layer of the workpiece, or a quality of an edge location of an edge of the workpiece, the AM process may be modified in real-time to correct the problem, an alert may be provided to an operator, and/or the AM process may be halted.

According to the invention, the powder bed sensing system includes a defect detection eddy current sensor array that is configured to be movably coupled with respect to a powder bed and that generates a first plurality of sensor signals while moving over a workpiece in the powder bed. The powder bed sensing system also includes a workpiece edge detection eddy current sensor array that is configured to be movably coupled with respect to the powder bed and that generates a second plurality of sensor signals while moving over the workpiece in the powder bed. The powder bed sensing system also includes a controller that is coupled to the defect detection eddy current sensor array and the workpiece edge detection eddy current sensor array. The controller is configured to determine, based on the first plurality of sensor signals, a workpiece material layer quality of a current material layer of the workpiece. The controller is further configured to determine, based on the second plurality of sensor signals, a workpiece edge location quality of the current material layer of the workpiece. The controller initiates an action based on at least one of the workpiece material layer quality and the workpiece edge location quality.

In one embodiment, the action includes initiating the addition of a next material layer.

In one embodiment, the action includes generating an alert and presenting the alert on a display device.

In one embodiment, the action includes adjusting a path of a heating apparatus on a next material layer cycle.

In one embodiment, adjusting the path of the heating apparatus on the next material layer cycle includes altering slice data that identifies locations in the powder bed of a next material layer.

In one embodiment, the action includes adjusting an operating parameter of a heating apparatus, such as a power level of a laser or a scan rate of the laser.

In one embodiment, the powder bed sensing system includes a powder condition eddy current sensor array that is configured to be movably coupled with respect to the powder bed and that generates a third plurality of sensor signals while moving over the powder bed. The controller is further configured to determine, based on the third plurality of sensor signals, a powder quality of powder in the powder bed.

In one embodiment, the powder quality indicates a powder defect, and an alert is generated that identifies the powder defect.

In one embodiment, the defect comprises an inconsistent density of the powder or a void in the powder.

In one embodiment, the controller is configured to determine, based on the first plurality of sensor signals, that the workpiece material layer quality of the current material layer of the workpiece is defective. The workpiece material location of a defect is determined based on the first plurality of sensor signals. A representation of the current material layer and an indication of a location on the current material layer of the defect are presented on a display device.

Those skilled in the art will appreciate the scope of the disclosure and realize additional aspects thereof after reading the following detailed description of the preferred embodiments in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a diagram of a powder bed;
Figure 2 is a top view diagram of the powder bed illustrated in Figure 1 in conjunction with a powder bed sensing system, according to one embodiment;
Figure 3 is a top view diagram of the powder bed in conjunction with the powder bed sensing system at a point in an additive manufacturing cycle where a defect detection eddy current sensor array is moving over a current material layer of the workpiece;
Figure 4 is a diagram illustrating a defect in a current material layer of the workpiece;
Figure 5 is a diagram illustrating an alert presented on a display device in response to the detection of the defect illustrated in Figure 4;
Figure 6 is a diagram illustrating a current material layer having an edge location deviation from a desired edge location, according to one embodiment;
Figure 7 is a diagram illustrating a side view of the powder bed, according to one embodiment; and
Figure 8 is a flowchart of a method for inspecting a current material layer of the workpiece, according to one embodiment.

### DETAILED DESCRIPTION

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the embodiments are not limited to any particular sequence of steps. The use herein of ordinals in conjunction with an element is solely for distinguishing what might otherwise be similar or identical labels, such as "first plurality of sensor signals" and "second plurality of sensor signals," and does not imply a priority, a type, an importance, or other attribute, unless otherwise stated herein. The term "about" used herein in conjunction with a numeric value means any value that is within a range of ten percent greater than or ten percent less than the numeric value.

The embodiments relate to in-process powder bed additive manufacturing (AM). Generally, multiple eddy current sensor arrays are utilized during the AM process such that various aspects of the AM process are continually monitored while a workpiece is being manufactured. The eddy current sensor arrays include a defect detection eddy current sensor array, a workpiece edge detection eddy current sensor array, and may include a powder condition eddy current sensor array. Each eddy current sensor array generates signals as the eddy current sensor array is moved with respect to the powder bed. The signals are continually processed and analyzed, and, if it is determined that a quality problem exists, such as a quality of the powder in the powder bed, a quality of a material layer of the workpiece, or a quality of an edge location of an edge of the workpiece, the AM process may be modified in real-time to correct the problem, an alert may be provided to an operator, and/or the AM process may be halted.

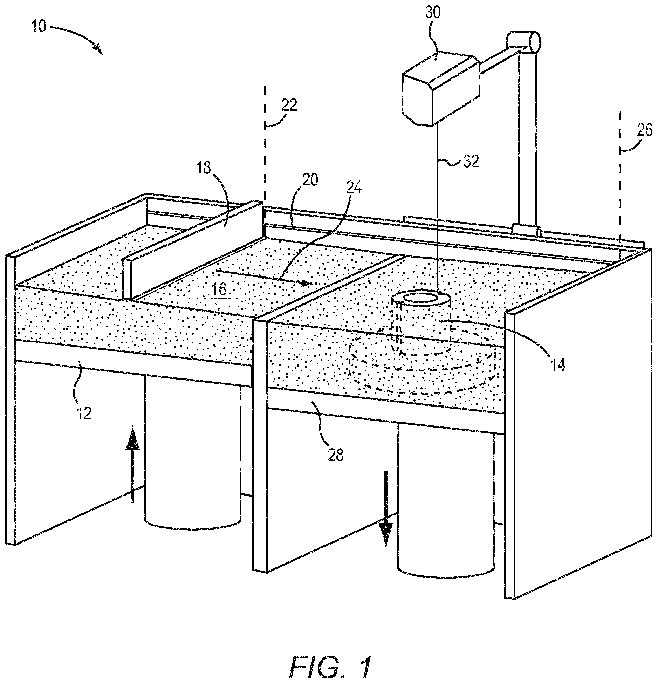

Figure 1 is a diagram of a powder bed 10. For purposes of illustration, the powder bed 10 is illustrated with a front rail omitted. The powder bed 10 includes a first platform 12 that is configured to be raised incrementally during an AM process to generate a workpiece 14. The first platform 12 supports a powder 16 that comprises the material from which the workpiece 14 will be formed. The powder 16 may comprise any powder suitable for the AM process, including, by way of non-limiting example, powders of stainless steel, cobalt-chrome alloys, titanium alloys, bronze-nickel alloys, tool steels, or nickel-based super alloys.

A recoater arm 18 is movably coupled with respect to a back rail 20. During the AM process, the first platform 12 is raised a predetermined distance, such as 1/1000 of an inch. The recoater arm 18 moves from a start position 22 in a direction 24 across the powder bed 10 to an end position 26 to move a thin layer of the powder 16 over a second platform 28. The recoater arm 18 may then be returned to the start position 22 or remain at the end position 26, depending on the particular design of the powder bed 10. A heating apparatus 30 heats the thin layer of the powder 16 in accordance with a workpiece data file, sometimes referred to herein as slice data, that identifies, for each material layer of the workpiece 14, the precise location of the respective material layer. In one embodiment, the heating apparatus 30 comprises a laser that is configured to emit a laser beam 32 toward the powder 16 in accordance with the workpiece data file.

The laser beam 32 is scanned at a scan rate in accordance with the workpiece data file to fuse the thin layer of powder 16 and thereby form an additional material layer on the workpiece 14. If the recoater arm 18 was not previously returned to the start position 22, the recoater arm 18 is returned to the start position 22 at this time. The second platform 28 lowers a predetermined distance based on a thickness of a fused material layer of the workpiece 14, and the first platform 12 is raised a predetermined distance, and another AM cycle is initiated. In this manner, the workpiece 14 is iteratively built up layer by layer.

After the AM process is completed, the workpiece 14 may be inspected. If the workpiece 14 fails inspection, it may be necessary to discard the workpiece 14 and generate a new workpiece 14, resulting in reduced throughput, material wastage, and time.

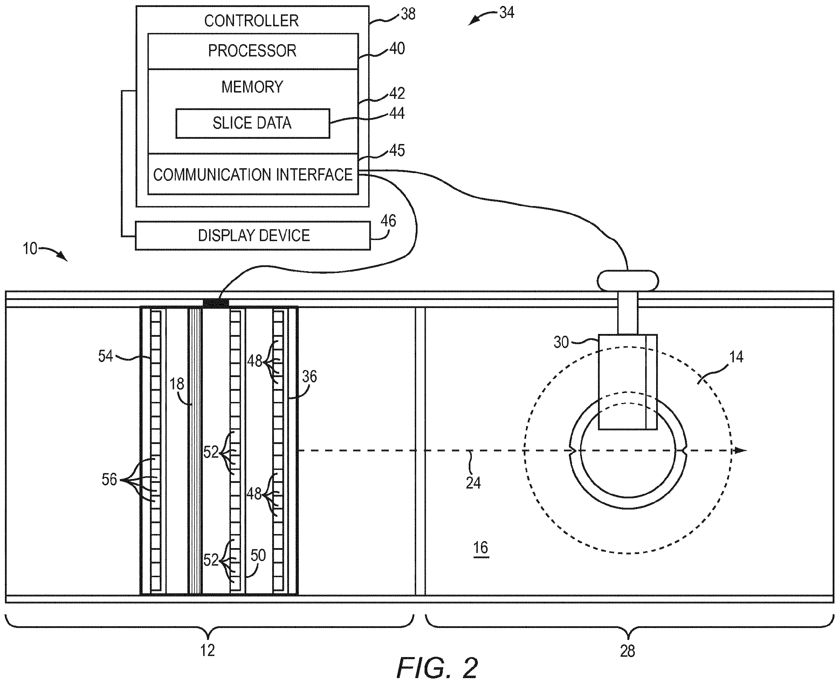

Figure 2 is a top view diagram of the powder bed 10 in conjunction with a powder bed sensing system 34 according to one embodiment. The powder bed sensing system 34 includes a defect detection eddy current sensor array (DDECSA) 36 that is movably coupled with respect to the powder bed 10. The powder bed sensing system 34 also includes a controller 38 that is communicatively coupled to the DDECSA 36. The controller 38 includes a processor 40 and a memory 42. The processor 40 may comprise any suitable general purpose processor device, proprietary processor device, or microprocessor device. The memory 42 may store slice data 44. The slice data 44 includes information that identifies locations in the powder bed 10 of each material layer of the workpiece 14. The slice data 44, among other things, may be used by the controller 38 to drive the heating apparatus 30 to heat the powder 16 in the second platform 28 at the appropriate locations to form the workpiece 14. The slice data 44 may be generated by any suitable workpiece design module, such as a computer-aided design and computer-aided manufacturing design module. The controller 38 includes one or more communication interfaces 45. In some embodiments, the controller 38 may also be communicatively coupled to a display device 46, which may be used to present information to an operator, for example.

The DDECSA 36, in one embodiment, comprises a plurality of differential probes 48, each differential probe 48 comprising a plurality of coils. In some embodiments, each differential probe 48 may comprise two coils, wound in opposition to one another. The DDECSA 36 may comprise any desired resolution of differential probes 48, such as four differential probes 48 per inch, more than four differential probes 48 per inch, or fewer than four differential probes 48 per inch. As the DDECSA 36 moves over the workpiece 14, the DDECSA 36 generates a first plurality of sensor signals. The first plurality of sensor signals may be continuously communicated to the controller 38 as the DDECSA 36 moves over the workpiece 14. In one embodiment, the first plurality of sensor signals comprises a plurality of differential signals that identify differences between the coils in the plurality of differential probes 48. Based on the first plurality of sensor signals, the controller 38 is configured to determine a workpiece material layer quality of a current material layer of the workpiece 14. The phrase "current material layer" is used herein to refer to the most recent material layer formed on the workpiece 14. The workpiece material layer quality may indicate that no defect has been detected or may indicate that a defect has been detected.

The powder bed sensing system 34 also includes a workpiece edge detection eddy current sensor array (WEDECSA) 50 that is movably coupled with respect to the powder bed 10. In one embodiment, the WEDECSA 50 also comprises a plurality of differential probes 52, each differential probe 52 comprising a plurality of coils. In some embodiments, each differential probe 52 may comprise two coils, wound in opposition to one another. As the WEDECSA 50 moves over the workpiece 14, the WEDECSA 50 generates a second plurality of sensor signals. The second plurality of sensor signals is communicated to the controller 38. Based on the second plurality of sensor signals, the controller 38 is configured to determine a workpiece edge location quality of the current material layer of the workpiece 14. The workpiece edge location quality relates to the accuracy of the edges of the current material layer of the workpiece 14 with respect to the slice data 44 and/or a previous material layer of the workpiece 14. Thus, the workpiece edge location quality may indicate that the actual edge locations of the current material layer are within predetermined tolerances of the edge locations as specified by the slice data 44 or within predetermined tolerances of a previous material layer. Alternatively, the workpiece edge location quality may indicate that the actual edge locations of the current material layer are outside of the predetermined tolerances of the edge locations as specified by the slice data 44 or outside of the predetermined tolerances of a previous material layer.

In some embodiments, the powder bed sensing system 34 also includes a powder condition eddy current sensor array (PCECSA) 54 that is movably coupled with respect to the powder bed 10. In one embodiment, the PCECSA 54 comprises a plurality of absolute probes 56, each absolute probe 56 comprising a single coil. As the PCECSA 54 moves over the powder 16, the PCECSA 54 generates a third plurality of sensor signals. The third plurality of sensor signals is communicated to the controller 38. Based on the third plurality of sensor signals, the controller 38 is configured to determine a powder quality of the powder 16. The powder quality may indicate that the quality of the powder 16 is suitable for generation of another material layer of the workpiece 14, or the powder quality may indicate that the quality of the powder 16 is unsuitable for the generation of another material layer of the workpiece 14.

Based on the workpiece material layer quality, the workpiece edge location quality, and the powder quality, the controller 38 initiates an action. If the workpiece material layer quality indicates that no defect has been detected, the workpiece edge location quality indicates that the actual edge locations of the current material layer are within predetermined tolerances, and the powder quality indicates that the quality of the powder 16 is suitable for the generation of another material layer, the action may comprise an addition of another material layer to the workpiece 14. Thus, for each AM cycle, the powder bed sensing system 34 is configured to scan the current material layer for defects, the actual locations of the edges of the current material layer for consistency and accuracy, and the powder bed 10 for suitability in generating a subsequent material layer.

As will be discussed in greater detail herein, if the powder bed sensing system 34 determines that there are problems in any of these three areas, the controller 38 may initiate an action, such as alerting an operator to the problem, automatically altering operational characteristics of the heating apparatus 30, and the like. Thus, the powder bed sensing system 34 may improve the quality of the workpiece 14 or may simply raise an alert to an operator that a problem has occurred such that further manufacturing of the workpiece 14 is not recommended.

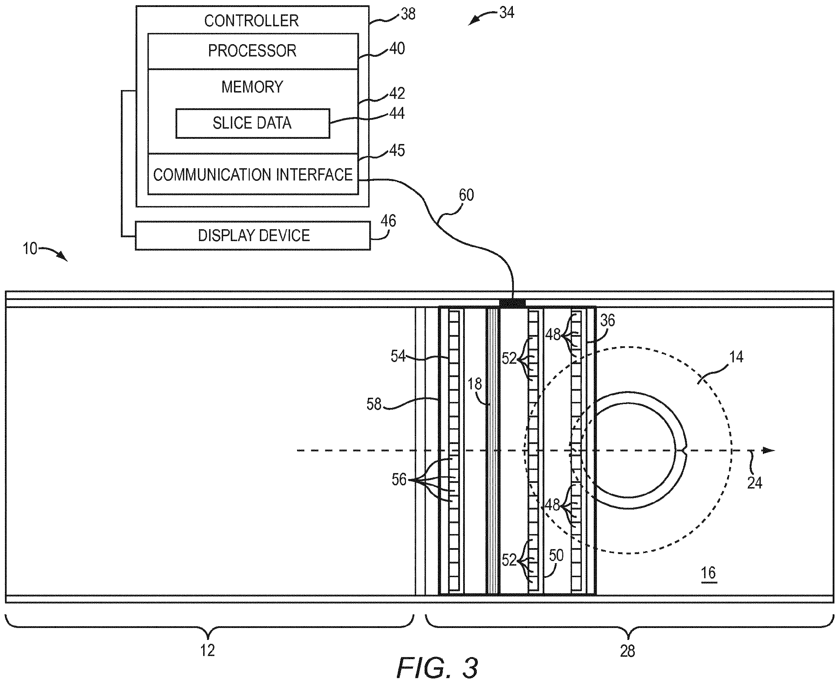

Figure 3 is a top view diagram of the powder bed 10 in conjunction with the powder bed sensing system 34 at a point in an AM cycle where the DDECSA 36 is moving over a current material layer of the workpiece 14. In one embodiment, the PCECSA 54, the recoater arm 18, the WEDECSA 50, and the DDECSA 36 move in conjunction with one another during each AM cycle. In one embodiment, the PCECSA 54, the recoater arm 18, the WEDECSA 50 and the DDECSA 36 may all be fixed with respect to one another via an assembly, such as a bracket 58, that is movably coupled with respect to the powder bed 10. The bracket 58 may also facilitate the communication of sensor signals from the PCECSA 54, the WEDECSA 50, and the DDECSA 36 via a wired or wireless communications link 60. As the DDECSA 36 moves over the current material layer of the workpiece 14, the controller 38 receives the first plurality of sensor signals. The first plurality of sensor signals may comprise a plurality of differential signals, each differential signal associated with a respective differential probe 48. The differential signal for a respective differential probe 48 may be null if both coils of the differential probe 48 are over a material layer that has a same, relatively even consistency. If a defect is encountered, such as a gap in a material layer, an uneven density of material, or the like, as the one coil moves over the defect and the other coil remains over a non-defective material layer, a differential signal is produced.

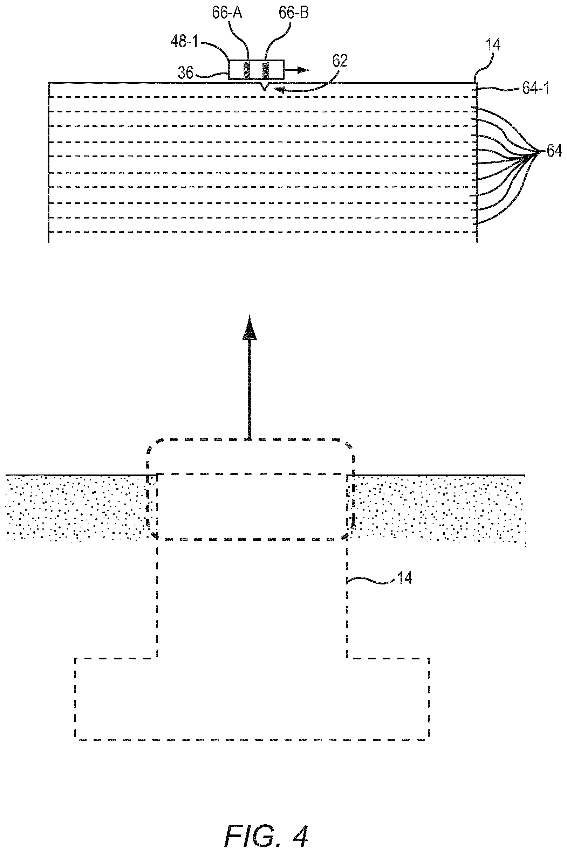

Figure 4 is a diagram illustrating a defect 62 in a material layer 64-1 of a plurality of material layers 64 of the workpiece 14. A probe 48-1 of the DDECSA 36 contains a pair of coils 66-A and 66-B. The DDECSA 36 sends sensor signals generated by the probe 48-1, as well as the other probes 48, to the controller 38 as the DDECSA 36 moves over the workpiece 14. As the coil 66-B moves over the defect 62, a differential signal is produced and sent to the controller 38. The controller 38 recognizes the differential signal as indicating a defect in the material layer 64-1. The length of time, amplitude, or other characteristic of the differential signal may be utilized to determine a severity of the defect 62. In some embodiments, below certain predetermined thresholds, the defect 62 may not affect the overall quality of or operational functionality of the workpiece 14, and may therefore be ignored. Each differential signal generated by a probe 48, 48-1 may be separately identifiable by the controller 38, and referenced to a particular location with respect to the powder bed 10. Thus, the controller 38 can determine, to a level of resolution of the probes 48 in the DDECSA 36, the location of the defect 62.

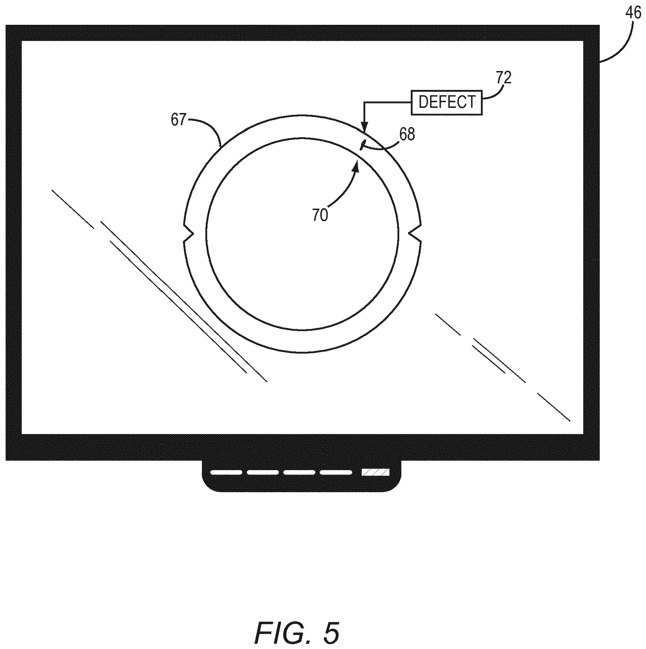

Figure 5 is a diagram illustrating an alert presented on the display device 46 in response to the detection of the defect 62 illustrated in Figure 4. In this example, assume that the defect 62 is determined to be a workpiece material layer quality problem, such that the workpiece material layer quality is determined to be defective. In one embodiment, based on the workpiece material layer quality, the controller 38 initiates an action by accessing the slice data 44 to obtain slice data associated with the material layer 64-1 and generates a rendering 67 of the material layer 64-1 on the display device 46, along with a depiction 68 of the defect 62 on a determined location 70 of the material layer 64-1. The controller 38 may also provide text 72 (e.g., "DEFECT") drawing the operator's attention to the workpiece material layer quality problem.

In other embodiments, depending on the particular defect identified, the controller 38 may determine that the particular defect is below a quality threshold, but that one or more operating parameters of the heating apparatus 30 may be altered such that the particular defect does not occur in subsequent material layers of the workpiece 14. For example, where the heating apparatus 30 comprises a laser, the controller 38 may determine that the particular defect is indicative of a laser beam of insufficient power or a laser beam of excessive power. The controller 38 may adjust a laser power operating parameter of the laser such that a laser beam of greater power, or lesser power, respectively, is utilized for subsequent material layers 64 to prevent the particular defect from further occurring.

Referring again to Figure 3, the controller 38 may initiate the WEDECSA 50 as the WEDECSA 50 nears an edge of the workpiece 14. The controller 38 receives a second plurality of sensor signals from the WEDECSA 50. Similar to the DDECSA 36, the WEDECSA 50 may comprise a plurality of differential probes 52 (Figure 2), each of which comprises multiple coils and which emit respective differential sensor signals based on differences of the material over which the multiple coils are moving. Each differential sensor signal generated by the probes 52 may be separately identifiable by the controller 38, and referenced to a particular location with respect to the powder bed 10. Thus, the controller 38 can determine, to a level of resolution of the probes 52 in the WEDECSA 50, the contours of the edges of the most recent material layer 64. In one embodiment, the controller 38, based on the second plurality of sensor signals, generates an edge map that identifies an actual location of each edge of the current material layer 64 of the workpiece 14. The controller 38 may access the slice data 44 to determine the specified locations of each edge of the current material layer of the workpiece 14 and compare the specified locations to the actual locations to determine the workpiece edge location quality of the current material layer 64.

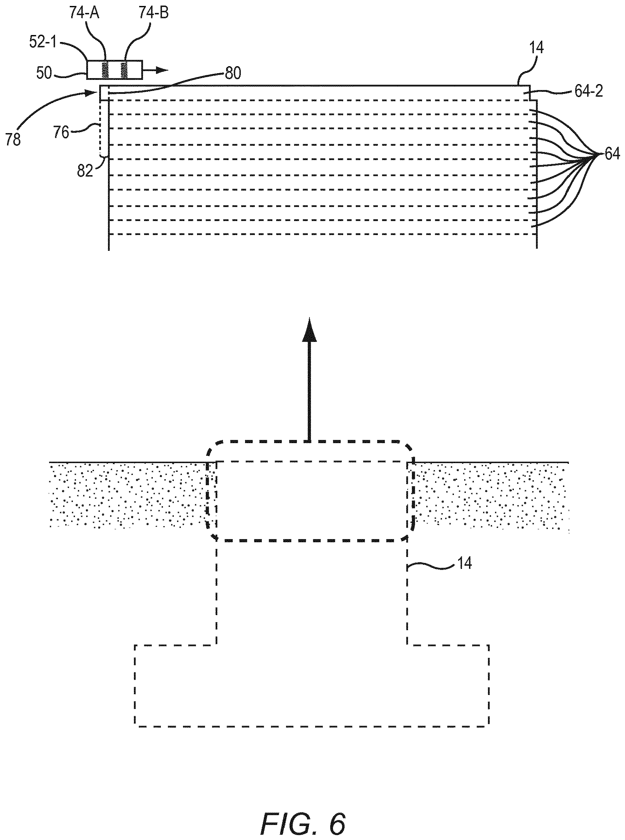

Figure 6 is a diagram illustrating a current material layer 64-2 of a plurality of material layers 64 having an edge location deviation from a desired edge location, according to one embodiment. In this example, a probe 52-1 of the WEDECSA 50 contains a pair of coils 74-A and 74-B. The WEDECSA 50 sends sensor signals generated by the probe 52-1, as well as the other probes 52, to the controller 38 as the WEDECSA 50 moves over the workpiece 14. As the coil 74-B moves over the edge of the workpiece 14, a differential signal is produced and sent to the controller 38. The controller 38 recognizes the differential signal as indicating an edge of the workpiece 14. In one embodiment, the controller 38, as the WEDECSA 50 moves over the entire workpiece 14, generates an edge map that identifies the actual location of each edge of the workpiece 14 based on the second plurality of signals generated by the WEDECSA 50.

In one embodiment, the controller 38 may access the slice data 44 to determine the specified locations of each edge of the workpiece 14. By comparing the edge map to the slice data 44, the controller 38 determines that an actual location 76 of an edge 78 of the workpiece 14 deviates from a specified location 80 by a distance 82. It is common that workpieces manufactured by an AM process may need post-manufacturing processing, and some edge deviation may be acceptable and not compromise the functionality of the workpiece 14. Thus, the controller 38 may compare the distance 82 to the predetermined tolerance and determine that the distance 82 is within the predetermined tolerance and that the workpiece edge location quality is satisfactory.

Alternatively, the controller 38 may compare the distance 82 to a predetermined tolerance and determine that the distance 82 is outside the predetermined tolerance and that the workpiece edge location quality is unsatisfactory. The controller 38 may then initiate an action, such as generating an alert and presenting the alert on the display device 46. Alternatively, or additionally, the controller 38 may determine that the distance 82 is not sufficient to halt the AM process but may adjust the path of the heating apparatus 30 for subsequent material layers 64 to correct for the deviation.

In one embodiment, the controller 38 may adjust the path of the heating apparatus 30 by modifying the slice data 44 to alter the locations of the edges of subsequent material layers 64 of the workpiece 14.

In another embodiment, the controller 38 may maintain a history of edge maps generated by the controller 38 for each material layer 64. The controller 38 may compare an edge map that corresponds to the current material layer 64 to the edge map that corresponds to the previous material layer 64 to determine edge location deviation. In some embodiments, the controller 38 may compare a plurality of edge maps that correspond to a plurality of successive material layers 64 to determine if the edge locations of the successive material layers 64 are drifting in a certain direction or pattern. The controller 38 may then adjust the path of the heating apparatus 30 to halt the drift, thereby preventing a relatively small incremental edge location deviation from becoming a defect that renders the workpiece 14 unusable.

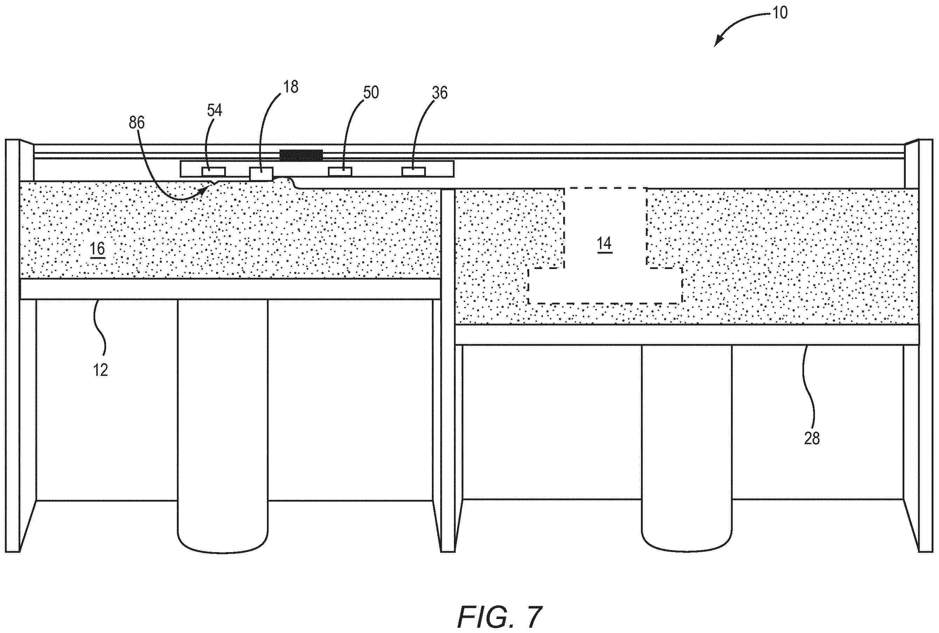

Figure 7 is a diagram illustrating a side view of the powder bed 10 according to one embodiment. As the PCECSA 54 moves across the powder bed 10, the PCECSA 54 generates a third plurality of sensor signals. The third plurality of sensor signals may be continuously communicated to the controller 38 as the PCECSA 54 moves over the workpiece 14. Based on the third plurality of sensor signals, the controller 38 is configured to determine a powder quality of the powder 16 in the powder bed 10. In particular, based on differences between the sensor signals generated by the absolute probes 56, the controller 38 may determine that the powder 16 contains a powder defect 86, such as a void, a variation in density, or the like, and thus that the powder quality is unsuitable. In particular, a void in the powder 16 may result in bare spots in the powder 16 that is swept across the workpiece 14 by the recoater arm 18. A bare spot will result in gaps between the material layers 64 of the workpiece 14. Based on the determination that the powder quality is unsuitable, the controller 38 may initiate an action, such as the generation of an alert identifying the existence of the powder defect 86, and present the alert on the display device 46.

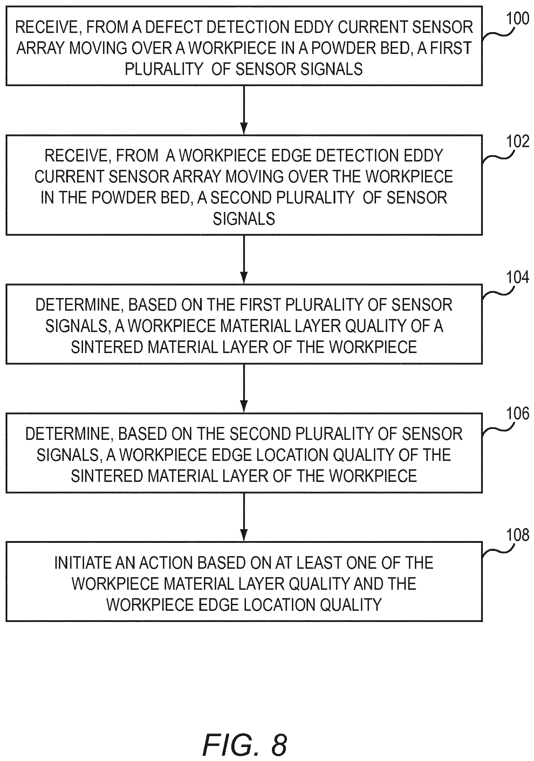

Figure 8 is a flowchart of a method for inspecting a material layer 64 of the workpiece 14, according to one embodiment. Figure 8 will be discussed in conjunction with Figure 3. The controller 38 receives, from the DDECSA 36 moving over the workpiece 14 in the powder bed 10, a first plurality of sensor signals (block 100). The controller 38 receives, from the WEDECSA 50 moving over the workpiece 14 in the powder bed 10, a second plurality of sensor signals (block 102). The controller 38 determines, The controller 38 determines, based on the first plurality of signals, a workpiece material layer quality of a current material layer 64 of the workpiece 14 (block 104). The controller 38 determines, based on the second plurality of signals, a workpiece edge location quality of the current material layer 64 of the workpiece 14. The controller 38 initiates an action based on at least one of the workpiece material layer quality and the workpiece edge location quality (block 106).

Note that for purposes of illustration, the three sensor arrays, in particular the DDECSA 36, the WEDECSA 50, and the PCECSA 54, have been shown in a particular configuration, but the embodiments are not limited to any particular configuration, and the particular configuration of the three sensor arrays may differ based on the particular system. For example, the WEDECSA 50 may lead the DDECSA 36, rather than trail the DDECSA 36. Moreover, some sensor arrays may operate while moving in one direction with respect to the powder bed 10, and other sensor arrays may operate while moving in the opposite direction.

## Claims

1. A powder bed sensing system, comprising:
a defect detection eddy current sensor array configured to be movably coupled with respect to a powder bed and to generate a first plurality of sensor signals while moving over a workpiece in the powder bed;
a workpiece edge detection eddy current sensor array configured to be movably coupled with respect to the powder bed and to generate a second plurality of sensor signals while moving over the workpiece in the powder bed; and
a controller coupled to the defect detection eddy current sensor array and the workpiece edge detection eddy current sensor array, and configured to:
determine, based on the first plurality of sensor signals, a workpiece material layer quality of a current material layer of the workpiece;
determine, based on the second plurality of sensor signals, a workpiece edge location quality of the current material layer of the workpiece; and
initiate an action based on at least one of the workpiece material layer quality and the workpiece edge location quality.

2. The powder bed sensing system of claim 1, wherein to initiate the action based on the at least one of the workpiece material layer quality and the workpiece edge location quality the controller is further configured to initiate the addition of a next material layer based on the at least one of the workpiece material layer quality and the workpiece edge location quality.

3. The powder bed sensing system of claim 1, wherein to initiate the action based on the at least one of the workpiece material layer quality and the workpiece edge location quality the controller is further configured to:
generate an alert; and
present the alert on a display device.

4. The powder bed sensing system of claim 1, wherein to initiate the action based on the at least one of the workpiece material layer quality and the workpiece edge location quality the controller is further configured to adjust a path of a heating apparatus on a next material layer cycle based on at least one of the workpiece material layer quality and the workpiece edge location quality.

5. The powder bed sensing system of claim 4, wherein to adjust the path of the heating apparatus on the next material layer cycle the controller is configured to alter slice data that identifies locations in the powder bed of a next material layer.

6. The powder bed sensing system of claim 1, wherein to initiate the action based on the at least one of the workpiece material layer quality and the workpiece edge location quality the controller is configured to adjust an operating parameter of a heating apparatus based on at least one of the workpiece material layer quality and the workpiece edge location quality.

7. The powder bed sensing system of claim 6, wherein the heating apparatus comprises a laser, and the operating parameter is a power level of the laser or a scan rate of the laser.

8. The powder bed sensing system of claim 1, further comprising a powder condition eddy current sensor array configured to be movably coupled with respect to the powder bed and to generate a third plurality of sensor signals while moving over the powder bed.

9. The powder bed sensing system of claim 8, wherein the controller is further configured to:
determine, based on the third plurality of sensor signals, a powder quality of powder in the powder bed; and
initiate the action based on at least one of the workpiece material layer quality, the workpiece edge location quality, and the powder quality.

10. The powder bed sensing system of claim 9, wherein:
the powder quality indicates a powder defect; and
to initiate the action based on the at least one of the workpiece material layer quality, the workpiece edge location quality, and the powder quality the controller is further configured to generate an alert that identifies the powder defect.

11. The powder bed sensing system of claim 10, wherein the powder defect comprises an inconsistent density of the powder or a void in the powder.

12. The powder bed sensing system of claim 1, wherein the controller is further configured to:
determine, based on the first plurality of sensor signals, that the workpiece material layer quality of the current material layer of the workpiece is defective;
determine, based on the first plurality of sensor signals, a workpiece material location of a defect; and
present, on a display, a representation of the current material layer and an indication of a location on the current material layer of the defect.

13. The powder bed sensing system of claim 1, wherein to determine, based on the second plurality of sensor signals, the workpiece edge location quality of the current material layer of the workpiece, the controller is further configured to:
generate an edge map that identifies an actual location of each edge of the workpiece;
access slice data that identifies a specified location of each edge of the workpiece; and
compare the edge map to the slice data.

14. The powder bed sensing system of claim 1, wherein the defect detection eddy current sensor array is further configured to activate a plurality of coils to initiate eddy currents in the workpiece, and wherein to generate the first plurality of sensor signals, the defect detection eddy current sensor array is configured to generate a differential signal when a first of the plurality of coils is above a defect-free portion of the workpiece material layer and a second of the plurality of coils is above a defective portion of the workpiece material layer.

15. A method for inspecting a workpiece, comprising:
receiving, from a defect detection eddy current sensor array moving over a workpiece in a powder bed, a first plurality of sensor signals;
receiving, from a workpiece edge detection eddy current sensor array moving over the workpiece in the powder bed, a second plurality of sensor signals;
determining, based on the first plurality of sensor signals, a workpiece material layer quality of a current material layer of the workpiece;
determining, based on the second plurality of sensor signals, a workpiece edge location quality of the current material layer of the workpiece; and
initiating an action based on at least one of the workpiece material layer quality and the workpiece edge location quality.

16. The method of claim 15, wherein initiating the action comprises:
generating an alert; and
presenting the alert on a display device.

17. The method of claim 15, wherein initiating the action comprises adjusting a path of a heating apparatus on a next material layer cycle based on at least one of the workpiece material layer quality and the workpiece edge location quality.

18. The method of claim 17, wherein adjusting the path of the heating apparatus on the next material layer cycle comprises altering slice data that identifies locations in the powder bed of a next material layer.

19. The method of claim 15, further comprising:
receiving, from a powder condition eddy current sensor array moving over the powder bed, a third plurality of sensor signals; and
determining, based on the third plurality of sensor signals, a powder quality of powder in the powder bed.

## Patentansprüche

1. Pulverbett-Abtastsystem, umfassend:
eine Wirbelstrom-Sensorenanordnung zum Detektieren von Fehlern, die ausgestaltet ist, um bewegbar in Bezug auf ein Pulverbett gekoppelt zu sein und eine erste Vielzahl von Sensorsignalen zu erzeugen und sich dabei über einem Werkstück im Pulverbett zu bewegen;
eine Wirbelstrom-Sensorenanordnung zum Detektieren einer Werkstückkante, die ausgestaltet ist, um bewegbar in Bezug auf das Pulverbett gekoppelt zu sein und eine zweite Vielzahl von Sensorsignalen zu erzeugen und sich dabei über dem Werkstück im Pulverbett zu bewegen;
eine Steuereinheit, die an die Wirbelstrom-Sensorenanordnung zum Detektieren von Fehlern und die Wirbelstrom-Sensorenanordnung zum Detektieren einer Werkstückkante gekoppelt und ausgestaltet ist, zum:
Bestimmen einer Werkstückmaterial-Schichtqualität einer Strom-Materialschicht des Werkstücks basierend auf der ersten Vielzahl von Sensorsignalen;
Bestimmen einer Werkstückkanten-Stellenqualität der Strom-Materialschicht des Werkstücks basierend auf der zweiten Vielzahl von Sensorsignalen;
Initiieren einer Aktion basierend auf wenigstens entweder der Werkstückmaterial-Qualität oder der Werkstückkanten-Stellenqualität.

2. Pulverbett-Abtastsystem nach Anspruch 1, wobei die Steuereinheit weiterhin zum Initiieren der Aktion basierend auf wenigstens entweder der Werkstückmaterial-Schichtqualität oder der Werkstückkanten-Stellenqualität ausgestaltet ist, um das Addieren einer nächsten Materialschicht basierend auf wenigstens entweder der Werkstückmaterial-Schichtqualität oder der Werkstückkanten-Stellenqualität zu initiieren.

3. Pulverbett-Abtastsystem nach Anspruch 1, wobei die Steuereinheit zum Initiieren der Aktion basierend auf wenigstens entweder der Werkstückmaterial-Schichtqualität oder der Werkstückkanten-Stellenqualität weiterhin ausgestaltet zum:
Erzeugen eines Alarms; und
Anzeigen des Alarms auf einem Anzeigegerät.

4. Pulverbett-Abtastsystem nach Anspruch 1, wobei die Steuereinheit zum Initiieren der Aktion basierend auf wenigstens entweder der Werkstückmaterial-Schichtqualität oder der Werkstückkanten-Stellenqualität weiterhin ausgestaltet ist, um einen Pfad eines Heiz-Apparatus auf einem nächsten Materialschicht-Zyklus basierend auf wenigstens entweder der Werkstückmaterial-Schichtqualität oder der Werkstückkanten-Stellenqualität anzupassen.

5. Pulverbett-Abtastsystem nach Anspruch 4, wobei die Steuereinheit zum Anpassen des Pfades des Heiz-Apparatus auf dem nächsten Materialschicht-Zyklus ausgestaltet ist, um die Scheibendaten zu ändern, die Stellen in dem Pulverbett der nächsten Materialschicht erkennen.

6. Pulverbett-Abtastsystem nach Anspruch 1, wobei die Steuereinheit zum Initiieren der Aktion basierend auf wenigstens entweder der Werkstückmaterial-Schichtqualität oder der Werkstückkanten-Anordnungsqualität ausgestaltet ist, um einen Betriebsparameter eines Heiz-Apparatus basierend auf wenigstens entweder der Werkstückmaterial-Schichtqualität oder der Werkstückkanten-Stellenqualität anzupassen.

7. Pulverbett-Abtastsystem nach Anspruch 6, wobei der Heiz-Apparatus einen Laser umfasst und der Betriebsparameter ein Leistungsniveau des Lasers oder eine Scanrate des Lasers ist.

8. Pulverbett-Abtastsystem nach Anspruch 1, weiterhin umfassend eine Wirbelstrom-Sensorenanordnung zum Detektieren eines Pulverzustandes, die ausgestaltet ist, um bewegbar in Bezug auf das Pulverbett gekoppelt zu sein und eine dritte Vielzahl von Sensorsignalen zu erzeugen und sich dabei über dem Pulverbett zu bewegen.

9. Pulverbett-Abtastsystem nach Anspruch 8, wobei die Steuereinheit weiterhin ausgestaltet ist zum:
Bestimmen einer Pulverqualität des Pulvers in dem Pulverbett basierend auf der dritten Vielzahl von Sensorsignalen; und
Initiieren der Aktion basierend auf wenigstens entweder der Werkstückmaterial-Qualität, der Werkstückkanten-Stellenqualität oder der Pulverqualität.

10. Pulverbett-Abtastsystem nach Anspruch 9, wobei:
die Pulverqualität einen Pulverfehler angezeigt; und
die Steuereinheit zum Initiieren der Aktion basierend auf wenigstens entweder der Werkstückmaterial-Schichtqualität, der Werkstückkanten-Stellenqualität oder der Pulverqualität weiterhin ausgestaltet ist, um einen Alarm zu erzeugen, der den Pulverfehler erkennt.

11. Pulverbett-Abtastsystem nach Anspruch 10, wobei der Pulverfehler eine unbeständige Dichte des Pulvers oder eine Fehlstelle im Pulver umfasst.

12. Pulverbett-Abtastsystem nach Anspruch 1, wobei die Steuereinheit weiterhin ausgestaltet ist zum:
Bestimmen, basierend auf der ersten Vielzahl von Sensorsignalen, dass die Werkstückmaterial-Schichtqualität der Strom-Materialschicht des Werkstücks fehlerhaft ist;
Bestimmen, basierend auf der ersten Vielzahl von Sensorsignalen, einer Werkstückmaterial-Stelle eines Fehlers; und
Anzeigen einer Darstellung der Strom-Materialschicht und einer Angabe einer Stelle des Fehlers auf der Strom-Materialschicht auf einer Anzeige.

13. Pulverbett-Abtastsystem nach Anspruch 1, wobei die Steuereinheit zum Bestimmen der Werkstückkanten-Stellenqualität der Strom-Materialschicht des Werkstücks basierend auf der zweiten Vielzahl von Sensorsignalen weiterhin ausgestaltet ist zum:
Erzeugen einer Kantenabbildung, die eine effektive Stelle jeder Kante des Werkstücks erkennt;
Zugreifen auf Scheibendaten, die eine spezifizierte Stelle jeder Kante des Werkstücks erkennt; und
Vergleichen der Kantenabbildung mit den Scheibendaten.

14. Pulverbett-Abtastsystem nach Anspruch 1, wobei die Wirbelstrom-Sensorenanordnung zum Detektieren von Fehlern weiterhin ausgestaltet ist, um eine Vielzahl von Spulen zum Initiieren von Wirbelströmen in dem Werkstück zu aktivieren und wobei die Wirbelstrom-Sensorenanordnung zum Detektieren von Fehlern zum Erzeugen der ersten Vielzahl von Sensorsignalen ausgestaltet ist, um ein Differenzialsignal zu erzeugen, wenn eine erste der Vielzahl von Spulen oberhalb eines fehlerfreien Abschnitts der Werkstückmaterial-Schicht liegt und eine zweite aus der Vielzahl von Spulen oberhalb eines fehlerhaften Abschnitts der Werkstückmaterial-Schicht liegt.

15. Verfahren zum Prüfen eines Werkstücks, umfassend:
Empfangen einer ersten Vielzahl von Sensorsignalen von einer Wirbelstrom-Sensorenanordnung zum Detektieren von Fehlern, die sich über einem Werkstück in einem Pulverbett bewegt;
Empfangen einer zweiten Vielzahl von Sensorsignalen von einer Wirbelstrom-Sensorenanordnung zum Detektieren einer Werkstückkante, die sich über dem Werkstück in dem Pulverbett bewegt;
Bestimmen einer Werkstückmaterial-Schichtqualität einer Strom-Materialschicht des Werkstücks basierend auf der ersten Vielzahl von Sensorsignalen;
Bestimmen einer Werkstückkanten-Stellenqualität der Strom-Materialschicht des Werkstücks basierend auf der zweiten Vielzahl von Sensorsignalen;
Initiieren einer Aktion basierend auf wenigstens einer Werkstückmaterial-Schichtqualität und der Werkstückkanten-Stellenqualität.

16. Verfahren nach Anspruch 15, wobei das Initiieren der Aktion umfasst:
Erzeugen eines Alarms; und
Anzeigen des Alarms auf einem Anzeigegerät.

17. Verfahren nach Anspruch 15, wobei das Initiieren der Aktion das Anpassen eines Pfades eines Heiz-Apparatus auf einem nächsten Materialschicht-Zyklus basierend auf wenigstens entweder der Werkstückmaterial-Schichtqualität oder der Werkstückkanten-Stellenqualität umfasst.

18. Verfahren nach Anspruch 17, wobei das Anpassen des Pfades des Heiz-Apparatus auf dem nächsten Materialschicht-Zyklus das Ändern der Scheibendaten umfasst, die Stellen in dem Pulverbett einer nächsten Materialschicht erkennen.

19. Verfahren nach Anspruch 15, weiterhin umfassend:
Empfangen einer dritten Vielzahl von Sensorsignalen von einer Wirbelstrom-Sensorenanordnung zum Detektieren eines Pulverzustandes über dem Pulverbett; und
Bestimmen einer Pulverqualität des Pulvers in dem Pulverbett basierend auf der dritten Vielzahl von Sensorsignalen.

## Revendications

1. Système de détection d'un lit de poudre, comprenant:
une série de capteurs à courant de Foucault de détection de défauts, configurée pour être couplée de manière mobile par rapport à un lit de poudre et pour générer une première pluralité de signaux de capteurs tout en se déplaçant au-dessus d'une pièce à usiner dans le lit de poudre;
une série de capteurs à courant de Foucault de détection d'arête de pièce à usiner, configurée pour être couplée de manière mobile par rapport à un lit de poudre et pour générer une deuxième pluralité de signaux de capteurs tout en se déplaçant au-dessus d'une pièce à usiner dans le lit de poudre; et
un dispositif de commande couplé à une série de capteurs à courant de Foucault de détection de défaut et une série de capteurs à courant de Foucault de détection d'arête de pièce à usiner et configuré pour:
déterminer, sur la base d'une première pluralité de signaux de capteurs, une qualité de couche de matériau de pièce à usiner d'une couche de matériau de courant de la pièce à usiner;
déterminer, sur la base d'une deuxième pluralité de signaux de capteurs, une qualité d'endroit d'arête de la pièce à usiner de la couche de matériau de courant de la pièce à usiner; et
initier une action sur la base d'au moins soit de la qualité de couche de matériau de la pièce à usiner soit de la qualité d'endroit d'arête de la pièce à usiner.

2. Système de détection d'un lit de poudre selon la revendication 1, où le dispositif de commande est en outre configuré pour initier l'ajout d'une couche de matériau suivante sur la base d'au moins soit de la qualité de couche de matériau de la pièce à usiner soit de la qualité d'endroit d'arête de la pièce à usiner afin d'initier l'action basée sur au moins soit de la qualité de couche de matériau de la pièce à usiner soit de la qualité d'endroit d'arête de la pièce à usiner.

3. Système de détection d'un lit de poudre selon la revendication 1, où le dispositif de commande, afin d'initier l'action sur la base d'au moins soit de la qualité de couche de matériau de la pièce à usiner soit de la qualité d'endroit d'arête de la pièce à usiner, est configuré pour:
générer une alerte; et
afficher une alerte sur une unité d'affichage.

4. Système de détection d'un lit de poudre selon la revendication 1, où le dispositif de commande est en outre configuré pour ajuster une route d'un appareil de chauffage sur un cycle couche de matériau suivant sur la base d'au moins soit de la qualité de couche de matériau de la pièce à usiner soit de la qualité d'endroit d'arête de la pièce à usiner afin d'initier l'action basée sur au moins soit de la qualité de couche de matériau de la pièce à usiner soit de la qualité d'endroit d'arête de la pièce à usiner.

5. Système de détection d'un lit de poudre selon la revendication 4, où le dispositif de commande est configuré afin de modifier des données de tranches qui identifient des endroits dans le lit de poudre d'une couche de matériau suivante afin d'ajuster la route de l'appareil de chauffage sur le cycle de couche de matériau suivant.

6. Système de détection d'un lit de poudre selon la revendication 1, où le dispositif de commande est configuré pour ajuster un paramètre d'exploitation d'un appareil de chauffage sur la base d'au moins soit de la qualité de couche de matériau de la pièce à usiner soit de la qualité d'endroit d'arête de la pièce à usiner afin d'initier l'action basée sur au moins soit de la qualité de couche de matériau de la pièce à usiner soit de la qualité d'endroit d'arête de la pièce à usiner.

7. Système de détection d'un lit de poudre selon la revendication 6, où l'appareil de chauffage comprend un laser et le paramètre d'exploitation est un niveau de puissance de laser ou un taux de scan du laser.

8. Système de détection d'un lit de poudre selon la revendication 1, comprenant par ailleurs une série de capteurs à courant de Foucault de l'état de poudre, configurée pour être couplée de manière mobile par rapport au lit de poudre et pour générer une troisième pluralité de signaux de capteurs tout en se déplaçant au-dessus du lit de poudre.

9. Système de détection d'un lit de poudre selon la revendication 8, où le dispositif de commande est par ailleurs configuré pour:
déterminer, sur la base de la troisième pluralité de signaux de capteurs, une qualité de poudre de la poudre dans le lit de poudre; et
initier une action sur la base d'au moins soit de la qualité de couche de matériau de la pièce à usiner soit de la qualité d'endroit d'arête de la pièce à usiner ou de la qualité de poudre.

10. Système de détection d'un lit de poudre selon la revendication 9, où:
la qualité de poudre indique un défaut de poudre; et
le dispositif de commande est par ailleurs configuré afin de générer une alerte qui identifie le défaut de poudre pour initier l'action sur la base d'au moins soit de la qualité de couche de matériau de la pièce à usiner, soit de la qualité d'endroit d'arête de la pièce à usiner ou de la qualité de poudre.

11. Système de détection d'un lit de poudre selon la revendication 10, où le défaut de poudre comprend une densité inconsistante de la poudre ou une lacune dans la poudre.

12. Système de détection d'un lit de poudre selon la revendication 1, où le dispositif de commande est par ailleurs configuré pour:
déterminer, sur la base de la première pluralité de signaux de capteurs, que la qualité de couche de matériau de la pièce à usiner de la couche de matériau de courant de la pièce à usiner est défectueuse;
déterminer, sur la base de la première pluralité de signaux de capteurs, un endroit de couche de matériau de la pièce à usiner d'un défaut; et
afficher, à un écran, une représentation de la couche de matériau de courant et une indication d'un endroit de la couche de matériau de courant du défaut.

13. Système de détection d'un lit de poudre selon la revendication 1, où, le dispositif de commande est par ailleurs configuré pour déterminer la qualité d'endroit d'arête de la pièce à usiner de la couche de matériaux de courant de la pièce à usiner sur la base de la deuxième pluralité de signaux de capteurs pour:
générer une illustration d'arête qui identifie un endroit effectif de chaque arête de la pièce à usiner;
accéder à des données de tranche qui identifient un endroit spécifié de chaque arête de la pièce à usiner; et
comparer l'illustration d'arête aux données de tranche.

14. Système de détection d'un lit de poudre selon la revendication 1, où la série de capteurs à courant de Foucault de détection de défaut est par ailleurs configurée pour activer une pluralité de bobines afin d'initier des courants de Foucault dans la pièce à usiner et où la série de capteurs à courant de Foucault de détection de défaut est configurée pour générer un signal différentiel pour générer la première pluralité de signaux de capteurs, lorsqu'une première pluralité de bobines est au-dessus d'une section exempte de défaut de la couche de matériau de la pièce à usiner et une seconde pluralité de bobines est au-dessus d'une section défectueuse de la couche de matériau de la pièce à usiner.

15. Procédé d'inspection d'une pièce à usiner, comprenant:
la réception d'une première pluralité de signaux de capteurs par une série de capteurs à courant de Foucault de détection de défaut se déplaçant au-dessus de la pièce à usiner dans un lit de poudre;
la réception d'une seconde pluralité de signaux de capteurs par une série de capteurs à courant de Foucault de détection d'arête de la pièce à usiner se déplaçant au-dessus de la pièce à usiner dans un lit de poudre;
déterminer, sur la base de la première pluralité de signaux de capteurs, une qualité de couche de matériau de pièce à usiner d'une couche de matériau de courant de la pièce à usiner;
déterminer, sur la base de la deuxième pluralité de signaux de capteurs, une qualité d'endroit d'arête de la pièce à usiner de la couche de matériau de courant de la pièce à usiner; et
initier une action sur la base d'au moins soit de la qualité de la couche de matériau de la pièce à usiner soit de la qualité d'endroit d'arête de la pièce à usiner.

16. Procédé selon la revendication 15, où l'initiation de l'action comprend:
générer une alerte; et
afficher l'alerte sur une unité d'affichage.

17. Procédé selon la revendication 15, où l'initiation de l'action comprend l'ajustage d'une route d'un appareil de chauffage sur un cycle de couche de matériau suivant sur la base d'au moins soit de la qualité de couche de matériau de la pièce à usiner soit de la qualité d'endroit d'arête de la pièce à usiner.

18. Procédé selon la revendication 17, où l'ajustage de la route de l'appareil de chauffage sur le cycle de couche de matériau suivant comprend des données de tranches modifiantes qui identifient des endroits dans le lit de poudre de la couche de matériau suivante.

19. Procédé selon la revendication 15, comprenant par ailleurs:
la réception d'une troisième pluralité de signaux de capteurs par une série de capteurs à courant de Foucault de l'état de poudre se déplaçant au-dessus du lit de poudre;
déterminer, sur la base de la troisième pluralité de signaux de capteurs, une qualité de poudre de la poudre dans le lit de poudre.
